# EUROPÄISCHE PATENTSCHRIFT

(11) **EP 3 064 812 B1**
(45) Veröffentlichungstag und Bekanntmachung des Hinweises auf die Patenterteilung: **25.01.2017**
(21) Anmeldenummer: 15157872.1
(22) Anmeldetag: 05.03.2015
(51) Int. Cl.: F16K 11/078, F16K 27/04

(54) **EINHANDHEBELKARTUSCHE**
SINGLE HAND LEVER CARTRIDGE
CARTOUCHE DE MITIGEUR

(43) Veröffentlichungstag der Anmeldung: 07.09.2016
(73) Patentinhaber: Flühs Drehtechnik GmbH, 58515 Lüdenscheid (DE)
(72) Erfinder: Lange, Lutz, 58511 Lüdenscheid (DE)
(74) Vertreter: Patentanwälte Dörner & Kötter PartG mbB

(56) Entgegenhaltungen:
- DE-U1-202013 104 200

## Beschreibung

Die Erfindung betrifft eine Einhandhebelkartusche nach dem Oberbegriff des Patentanspruchs 1.

In Sanitärarmaturen werden häufig als Mischerkartuschen ausgeführte Einhandhebelkartuschen eingesetzt, in denen eine eine Steuerscheibe sowie eine Durchlassscheibe aufweisende Scheibensteuerung angeordnet ist, welche über einen einzigen Hebel derart bedienbar ist, dass sowohl die Wassermenge als auch die Wassertemperatur über ein und denselben Hebel steuerbar ist. Dabei sind Kopfstück und Spindel oftmals aus Metall, insbesondere aus Messing hergestellt, während die Spindelaufnahme als Kunststoffspritzgussteil hergestellt ist. Bei einer drehbar und schwenkbar gelagerten Spindel ist die Spindel in der Spindelaufnahme über eine Achse schwenkbar gelagert, wobei die Spindelaufnahme in dem Kopfstück drehbar gelagert ist. Eine derartige Einhandhebelkartusche ist beispielsweise in der EP 13157471.7 beschrieben.

Bei großen Temperaturschwankungen, wie sie bereits bei dem abwechselnden Durchlauf von Heiß- und Kaltwasser auftreten, kann es zwischen der aus Kunststoff hergestellten Spindelaufnahme einerseits und der aus Metall hergestellten Spindel beziehungsweise dem aus Metall hergestellten Kopfstück andererseits aufgrund der unterschiedlichen Temperaturausdehnungskoeffizienten der Werkstoffe zu Spannungen zwischen den Bauteilen kommen, was zu einer Schwergängigkeit der Kartusche führen kann.

Zur Behebung dieses Problems wird in der DE 20 2013 104 200 U1 vorgeschlagen, in der Spindelaufnahme im Bereich der Durchführung Schlitze vorzusehen, wodurch die Innenkontur der Durchführung in einem endseitigen Abschnitt der Spindelaufnahme unterbrochen ist, wodurch ein Freiraum für sich ausdehnendes Material geschaffen ist, wodurch der Effekt einer Dehnungsfuge erzielt ist. Einer Verspannung zwischen der Spindelaufnahme und der Spindel beziehungsweise dem Kopfstück ist so auch bei großen Temperaturdifferenzen entgegengewirkt.

Die vorgeschlagene Lösung hat sich in der Praxis sehr bewährt. Durch die vorgesehenen Dehnungsfugen ist eine gleichbleibende Leichtgängigkeit der Spindel bewirkt, was eine angenehme Haptik zur Folge hat. Bei Armaturen, die einen Bedienhebel mit größerem Gewicht aufweisen, kann es jedoch dazu kommen, dass, je nach Lage des Bedienhebels, eine ungewollte Selbstverstellung des Ventiloberteils auftritt.

Hier will die Erfindung Abhilfe schaffen. Der Erfindung liegt die Aufgabe zugrunde, eine Einhandhebelkartusche der vorgenannten Art bereitzustellen, bei der auch beim Einsatz in Armaturen mit einem Bedienhebel mit größerem Gewicht eine ungewollte Selbstverstellung des Ventiloberteils vermieden ist. Gemäß der Erfindung wird diese Aufgabe durch eine Einhandhebelkartusche mit den Merkmalen des kennzeichnenden Teils des Patentanspruchs 1 gelöst.

Mit der Erfindung ist eine Einhandhebelkartusche geschaffen, bei der auch beim Einsatz in Armaturen mit einem Bedienhebel mit größerem Gewicht eine ungewollte Selbstverstellung des Ventiloberteils vermieden ist. Dadurch, dass in der Spindelaufnahme beabstandet zur Durchführung eine - vorzugsweise bogenförmig ausgebildete - Spreiznut angeordnet ist, in die wenigstens ein Spreizkörper eingebracht ist, wird im geschlitzten Bereich der Spindelaufnahme eine Anpresskraft in Richtung der Spindel sowie auch in Richtung des Kopfstücks erzielt. Durch die hierdurch zusätzlich indizierten Haltekräfte ist eine höhere Kraft zur Verstellung des Ventiloberteils erforderlich, wodurch eine ungewollte Selbstverstellung vermieden ist.

In Weiterbildung der Erfindung weist die Durchführung zumindest an dem der Steuerscheibe abgewandten Ende der Spindelaufnahme einen rechteckigen Querschnitt auf, wobei die Innenkontur des rechteckigen Querschnitts der Durchführung bereichsweise durch wenigstens drei bevorzugt in regelmäßigen Abständen angeordnete Schlitze unterbrochen ist. Hierdurch sind gleichmäßig verteilte elastische Abschnitte gebildet, wodurch eine gute Verteilung der durch den wenigstens einen Spreizkörper indizierten Anpresskräfte erzielt ist. Bevorzugt ist die Innenkontur des rechteckigen Querschnitts der Durchführung bereichsweise durch wenigstens vier Schlitze, besonders bevorzugt durch fünf Schlitze unterbrochen, wobei vorteilhaft wenigstens ein Schlitz mittig durch eine Seitenwand des rechteckigen Querschnitts der Durchführung in diese mündet. Eine gute Verteilung der Haltekräfte ist erzielbar, wenn an wenigstens zwei Ecken, bevorzugt an allen vier Ecken des rechteckigen Querschnitts der Durchführung jeweils ein Schlitz mündet.

In Ausgestaltung der Erfindung ist der wenigstens eine Spreizkörper bogenförmig ausgebildet und weist zumindest bereichsweise eine Breite auf, die größer ist, als die Breite der Spreiznut. Hierdurch ist eine gerichtete Vorspannung erzielbar.

In weiterer Ausgestaltung der Erfindung sind die Spreizkörper durch zwei zueinander entgegengerichtet radial vorgespannte Federelemente gebildet. Hierdurch ist eine separate Vorspannung in Richtung der Spindel sowie in Richtung des Kopfstücks erzielbar, wodurch eine separate Einstellung der Haltekräfte bezüglich eine Schwenkbewegung der Spindel, als auch bezüglich der Drehbewegung der Spindelaufnahme innerhalb des Kopfstücks ermöglicht ist.

In Weiterbildung der Erfindung ist die Breite der Spreiznut größer ausgebildet, als die Breite der Federelemente. Hierdurch ist eine Verjüngung des beidseitig der Spreiznut verbleibenden Materials der Spindelaufnahme bewirkt, wodurch die Elastizität der Spindelaufnahme erhöht ist. Darüber hinaus ist hierdurch die Montage der Federelemente erleichtert.

In alternativer Ausgestaltung der Erfindung weist die Spreiznut eine Breite auf, die im Wesentlichen der Breite der Federelemente entspricht, sodass diese zu einem Block übereinander gestapelt sind. Hierdurch kann sich die Spindel, wenn sie in Schließstellung gebracht wird, an der mit den Federelementen gefüllten Spindelaufnahme abstützen, wodurch ein Durchfedern nach außen verhindert ist.

In Ausgestaltung der Erfindung ist die Spindel über eine Achse mit der Spindelaufnahme verbunden, wobei der wenigstens eine Schlitz nicht über eine durch diese

Achse geführte gedachte horizontale Ebene hinausgeht. Hierdurch ist eine hohe Stabilität der Spindel bei gleichzeitiger Gewährleistung der Schwenkbarkeit der Spindel in der Spindelaufnahme erzielt.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

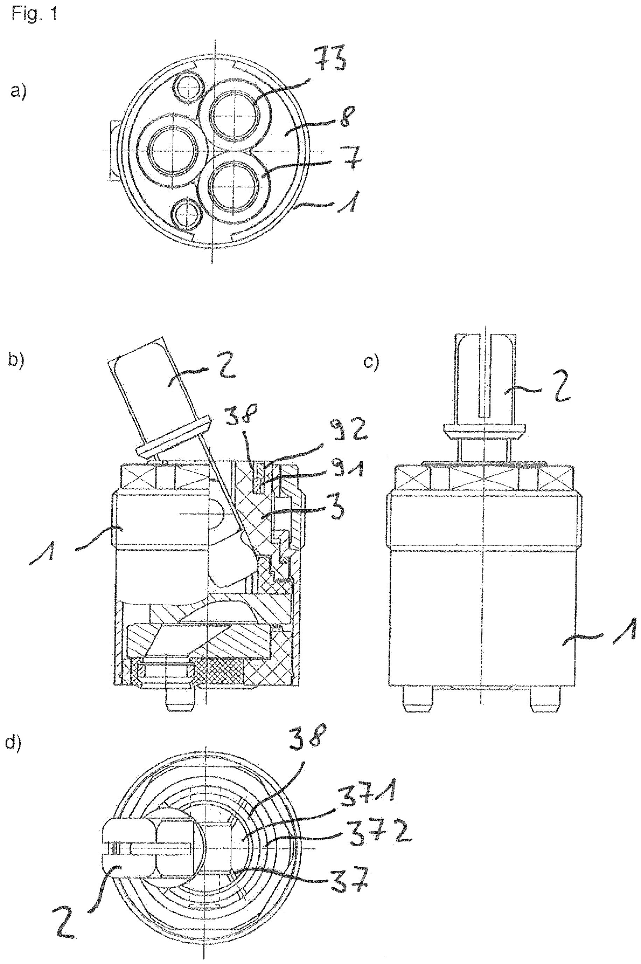

- Figur 1: die schematische Darstellung einer Einhandhebelmischerkartusche
a) in der Ansicht von unten;
b) im Teillängsschnitt;
c) in der Seitenansicht;
d) in der Draufsicht;

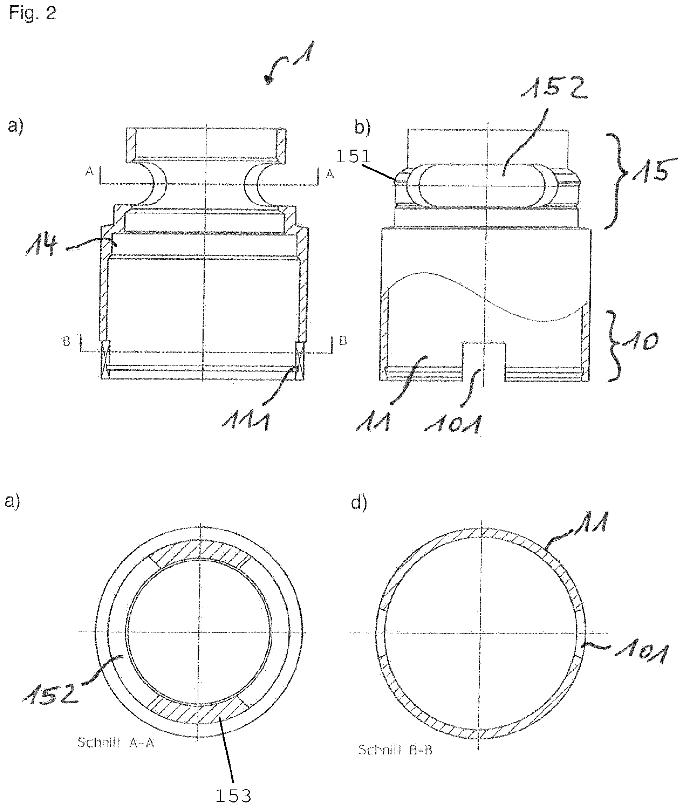

- Figur 2: die schematische Darstellung des Kopfstücks der Mischerkartusche aus Figur 1
a) im Längsschnitt;
b) im Teilschnitt in um 90° gedrehter Seitenansicht;
c) im Querschnitt (Schnitt A-A);
d) im Querschnitt (Schnitt B-B);

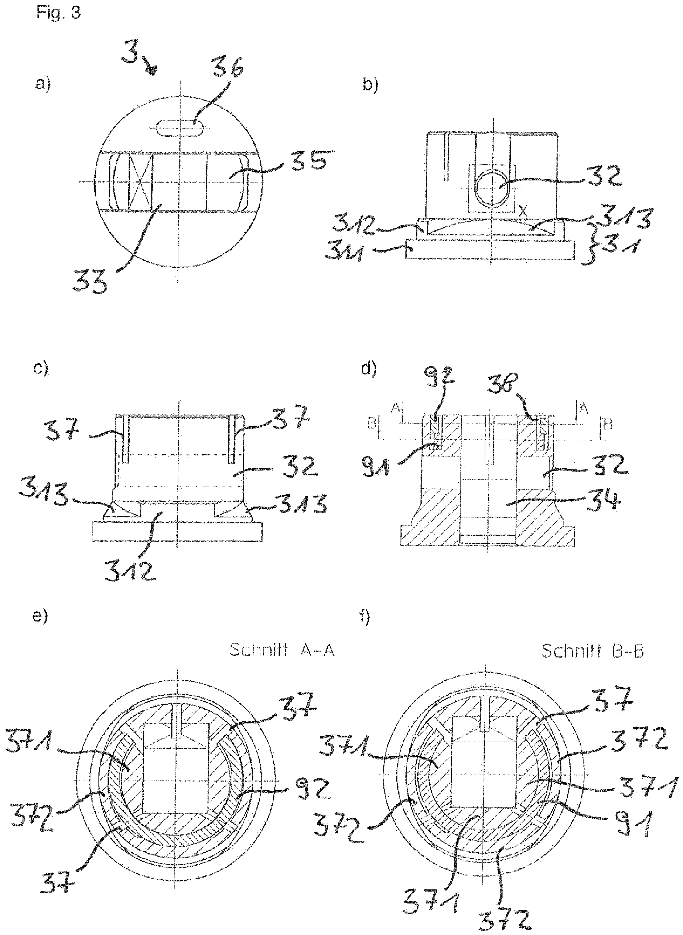

- Figur 3: die schematische Darstellung der Spindelaufnahme der Mischerkartusche aus Figur 1
a) in der Ansicht von unten;
b) in der Seitenansicht;
c) in einer um 90° verdrehten Seitenansicht;
d) im Längsschnitt;
e) im Querschnitt (Schnitt A-A);
f) im Querschnitt (Schnitt B-B);

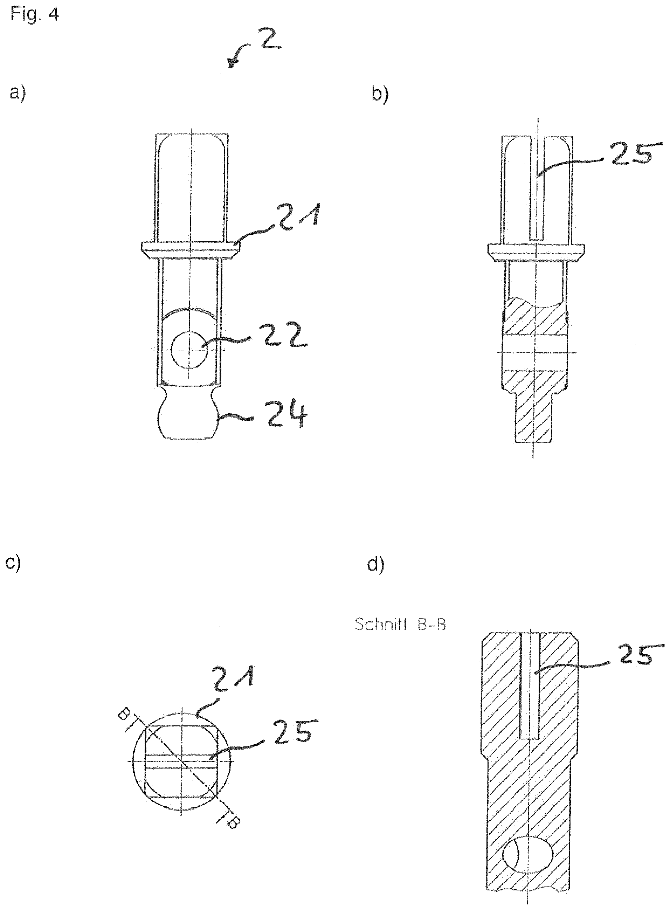

- Figur 4: die Spindel der Mischerkartusche aus Figur 1
a) in der Seitenansicht;
b) im Teilschnitt in um 90° gedrehter Seitenansicht;
c) in der Draufsicht;
d) im Längsschnitt (Schnitt B-B);

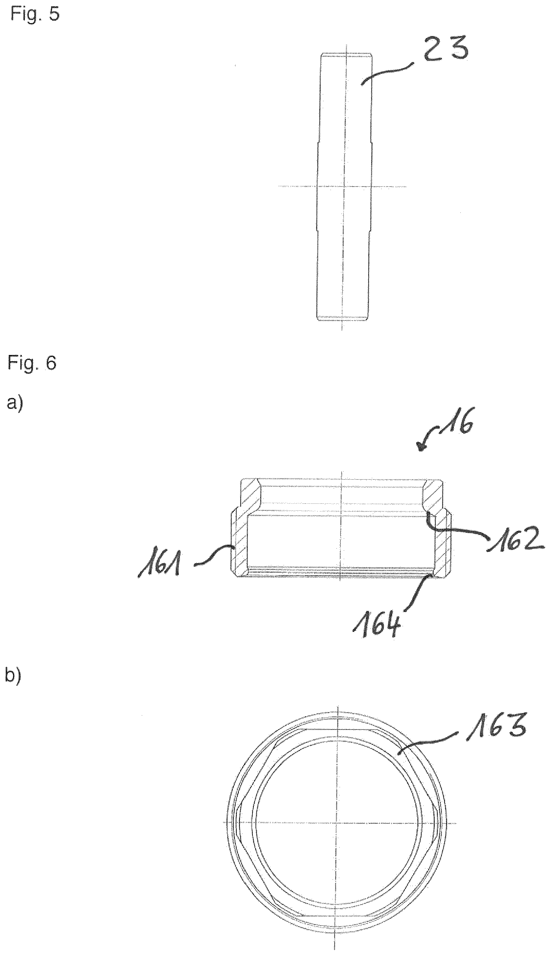

- Figur 5: die Schwenkachse der Spindel der Mischerkartusche aus Figur 1;
- Figur 6: den Befestigungsring der Mischerkartusche aus Figur 1
a) im Längsschnitt;
b) in der Draufsicht;

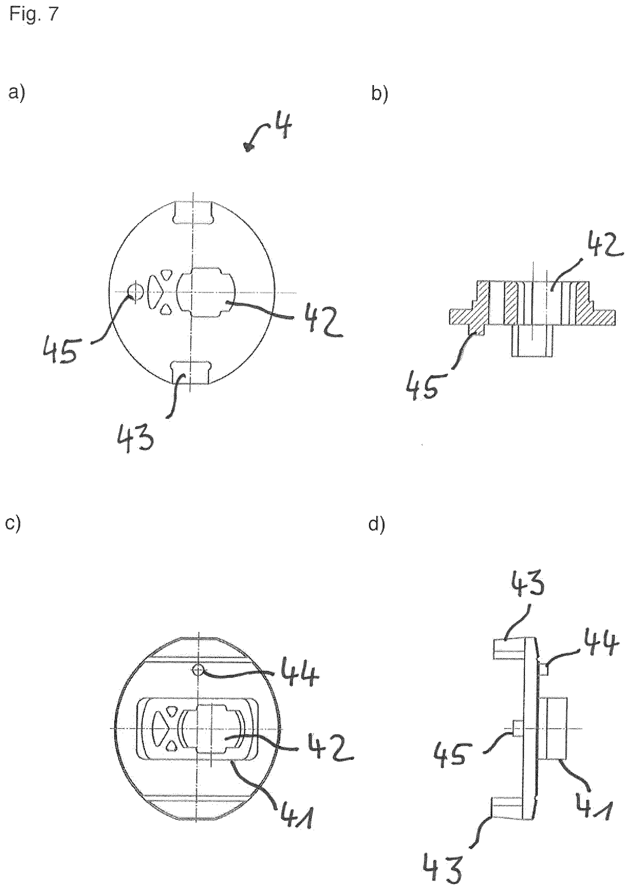

- Figur 7: die schematische Darstellung des Gleitstücks der Mischerkartusche aus Figur 1
a) in der Ansicht von unten ;
b) im Längsschnitt ;
c) in der Draufsicht;
d) in der Seitenansicht;

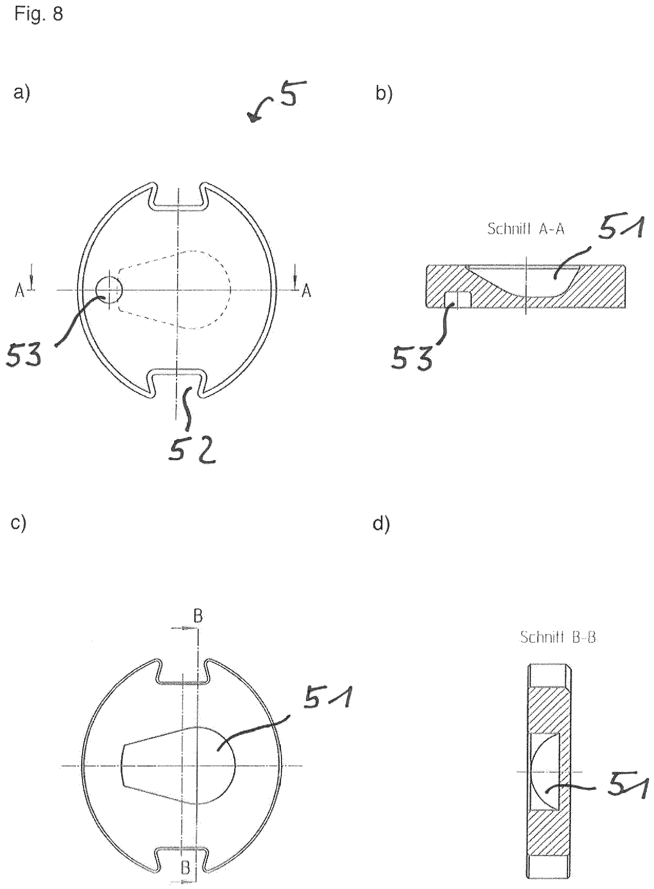

- Figur 8: die Darstellung der Steuerscheibe der Mischerkartusche aus Figur 1
a) in der Ansicht von unten;
b) im Querschnitt (Schnitt A-A);
c) in der Draufsicht;
d) im Querschnitt (Schnitt B-B);

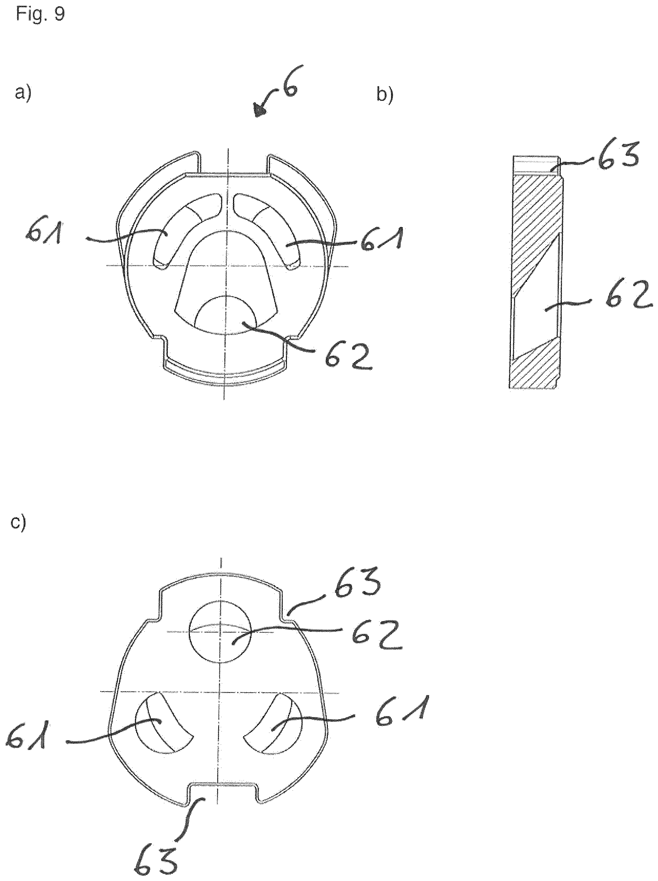

- Figur 9: die Darstellung der Durchlassscheibe der Mischerkartusche aus Figur 1
a) in der Ansicht von unten;
b) im Längsschnitt;
c) in der Draufsicht;

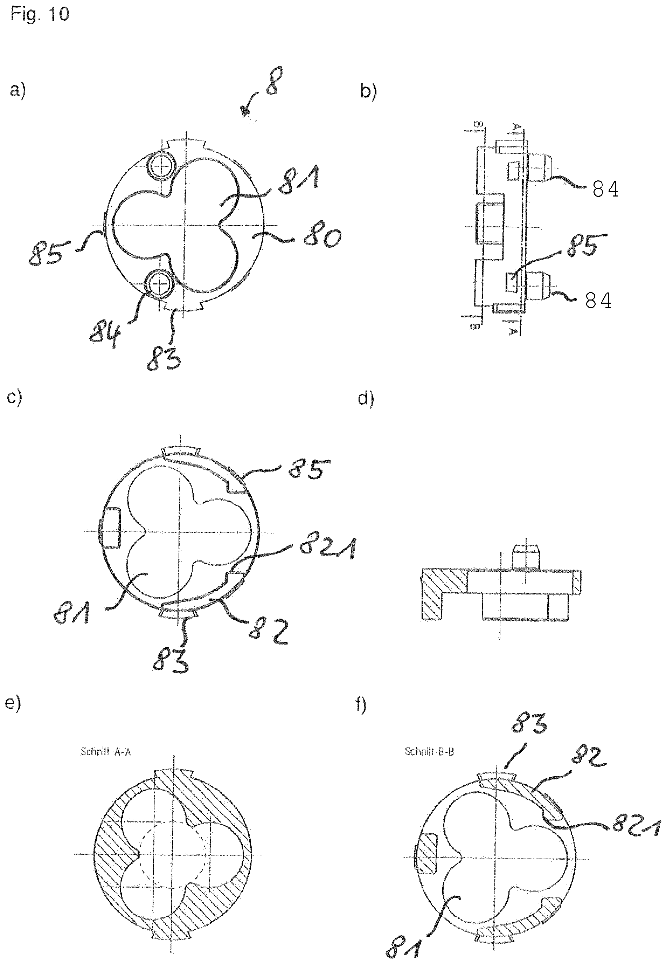

- Figur 10: die Darstellung des Bodenstücks des Mischerkartusche aus Figur 1
a) in der Ansicht von unten;
b) in der Seitenansicht;
c) in der Draufsicht;
d) im Teilschnitt;
e) im Querschnitt (Schnitt A-A);
f) im Querschnitt (Schnitt B-B);

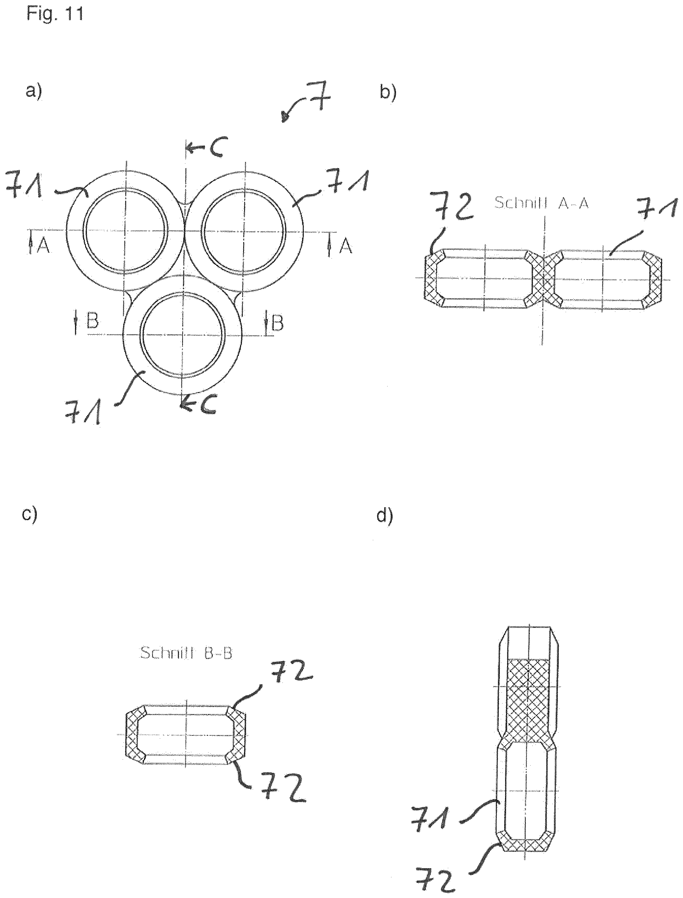

- Figur 11: die Darstellung des Lippendichtungsformteils der Mischerkartusche aus Figur 1
a) in der Draufsicht;
b) im Längsschnitt (Schnitt A-A);
c) im Längsschnitt (Schnitt B-B);
d) im Längsschnitt (Schnitt C-C);

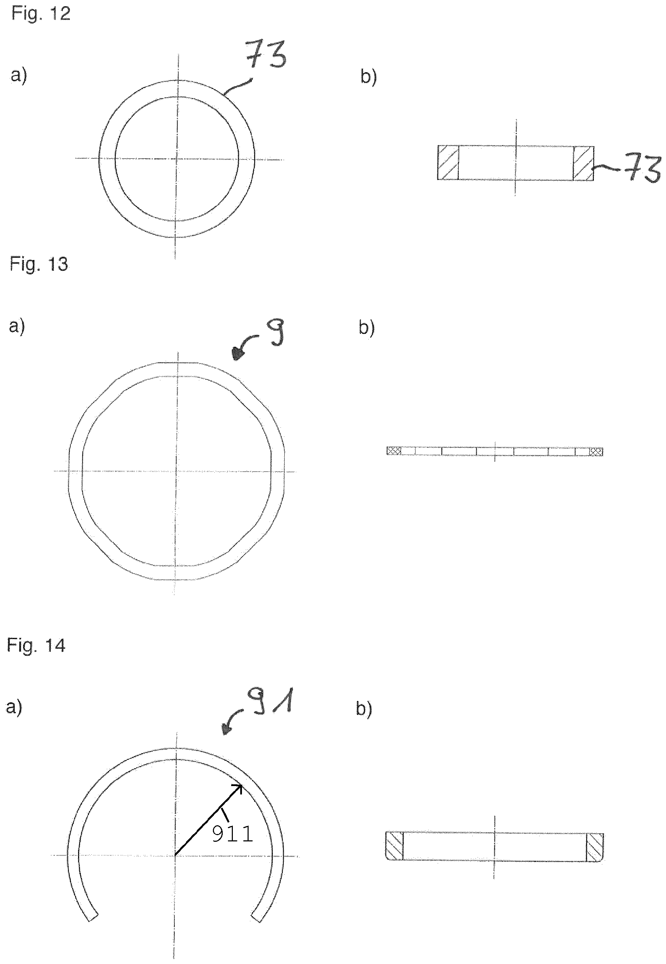

- Figur 12: die Darstellung des Stützrings des Lippendichtungsformteils der Mischerkartusche aus Figur 1
a) in der Draufsicht;
b) im Längsschnitt;
- Figur 13: die Darstellung des Gleitrings der Mischerkartusche aus Figur 1
a) in der Draufsicht;
b) im Querschnitt;
- Figur 14: die Darstellung des ersten Federrings der Mischerkartusche aus Figur 1
a) in der Draufsicht;
b) im Querschnitt;
- Figur 15: die Darstellung des zweiten Federrings der Mischerkartusche aus Figur 1
a) in der Draufsicht;
b) im Querschnitt;
- Figur 16: die schematische Darstellung einer Einhandhebelmischerkartusche in einer weiteren Ausführungsform im Teillängsschnitt.

Die als Ausführungsbeispiel gewählte Einhandhebelmischerkartusche besteht im Wesentlichen aus einem Kopfstück 1, in das eine Spindel 2 axial hineinragt, die in einer drehbar gelagerten Spindelaufnahme 3 schwenkbar gelagert ist und die in ein Gleitstück 4 eingreift, das mit einer Steuerscheibe 5 verbunden ist, die mit einer Durchlassscheibe 6 korrespondiert, an die sich ein Bodenstück 8 anschließt, welches ein Dichtungsformteil 7 aufnimmt.

Das Kopfstück 1 ist hülsenartig ausgebildet und im Ausführungsbeispiel als Messingdrehteil hergestellt. An seinen dem Bodenstück 8 zugewandten endseitigen Abschnitt 10 sind in das Kopfstück 1 diametral zueinander zwei rechteckförmige Ausnehmungen 101 eingebracht, durch die zwei bogenförmige Stege 11 gebildet sind, an deren Innenseite eine Rastnut 111 eingebracht ist. An seinem den Stegen 11 gegenüberliegenden Ende weist das Kopfstück 1 einen durchmesserreduzierten Abschnitt 15 auf, in dem diametral gegenüberliegend zwei radiale Langlöcher 152 eingebracht sind, welche der Drehbegrenzung der Spindelaufnahme 3 dienen. Zwischen den Langlöchern 152 sind zwei radial umlaufende Stege 153 ausgebildet, die einen gegenüber dem durchmesserreduzierten Abschnitt 15 vergrößerten Außendurchmesser aufweisen. Auf den Stegen 153 ist jeweils eine Rastnase 151 in Form einer einen Hinterschnitt ausbildenden radialen Rastkante angeordnet. Die Rastnase 151 dient der verliersicheren Halterung des Befestigungsrings 16. Unterhalb des durchmesserreduzierten Abschnitts 15 ist an dem Kopfstück 1 innen ein Absatz 14 ausgebildet.

Auf den durchmesserreduzierten Abschnitt 15 des Kopfstücks 1 ist weiterhin ein Befestigungsring 16 aufgestülpt. Der Befestigungsring 16 weist außen umlaufend ein Außengewinde 161 zum Einschrauben in eine Armatur auf. Oberhalb des Außengewindes 161 ist der Befestigungsring 16 mit einem Außensechskant 163 versehen. Unterhalb des Außensechskants 163 ist in dem Befestigungsring 16 innen ein Absatz 162 gebildet. An seinen dem Außensechskant 163 entgegengesetzten Ende ist innen in dem Befestigungsring weiterhin umlaufend eine Nase 164 angeformt.

Die Spindel 2 ist im Ausführungsbeispiel im Wesentlichen quaderförmig ausgebildet. Etwa mittig ist an der Spindel 2 eine kreisringförmige koaxiale Anformung 21 zur Aufnahme eines - nicht dargestellten - Bedienteils angeformt. Oberhalb der Anformung 21 ist in die Spindel 2 ein bis zu der Anformung 21 geführter Schlitz 25 eingebracht. Unterhalb der Anformung 21 ist durch die Spindel 2 eine Bohrung 22 zur Aufnahme eines Achsstiftes 23 eingebracht. Endseitig ist an die Spindel 2 ein in Form einer Kugelscheibe ausgebildeter Steuerkopf 24 angeformt, der an seiner dem Gleitstück 4 zugewandten Seite abgeflacht ausgebildet ist.

Die Spindelaufnahme 3 ist als im Wesentlichen zylinderförmiges Kunststoffspritzgussteil ausgebildet. An seinem dem Gleitstück 4 zugewandten Ende ist an der Spindelaufnahme 3 ein zweistufiger Absatz 31 angeformt, dessen Kontur der Innenkontur des zweistufigen Absatzes 14 des Kopfstücks 1 entspricht, an der dieser anliegt. Der oberhalb des endseitigen ersten Absatzes 311 angeordnete, gegenüber diesem durchmesserreduziert ausgebildete zweite Absatz 312 des zweistufigen Absatzes 31 ist im Bereich der beiden Längsseitenwände des rechteckigen Querschnitts der Durchführung 33 axial schräg nach innen zulaufend ausgebildet, sodass unterhalb der Durchgangsbohrung 32 zwei konusabschnittartige Schrägen 313 gebildet sind. Der zweite Absatz 312 weist hierdurch in der Draufsicht eine hammerkopfförmige Kontur auf. Auf dem ersten Absatz 311 ist ein Gleitring 9 angeordnet. Der Gleitring 9 weist eine polygonale Außenkontur auf, die im Ausführungsbeispiel zwölfeckig ausgebildet ist. Der Außendurchmesser dieser polygonalen Außenkontur ist dabei geringfügig größer als der Außendurchmesser des ersten Absatzes 311, dessen Außendurchmesser wiederum geringfügig kleiner dimensioniert ist, als der Innendurchmesser des Absatzes 14 des Kopfstücks 1.

Oberhalb des zweistufigen Absatzes 31 ist durch die Spindelaufnahme 3 eine radiale Durchgangsbohrung 32 zur Aufnahme des Achsstiftes 23 für die Spindel 2 eingebracht. Die Durchgangsbohrung 32 weist einen polygonalen Querschnitt auf, der im Ausführungsbeispiel als Zehneck ausgebildet ist. Axial ist durch die Spindelaufnahme 3 eine Durchführung 33 für die Spindel 2 angeformt, welche seitliche Anschläge 34 aufweist, durch die der Schwenkradius der Spindel 2 um den Achsstift 23 begrenzt ist. Die Durchführung 33 weist einen im Wesentlichen rechteckigen Querschnitt auf. An den vier Ecken des im Wesentlichen quadratischen axialen Durchgangs der Durchführung 33 ist in die Spindelaufnahme 3 jeweils ein einen Spalt ausbildender Schlitz 37 angeordnet, der sich radial nach außen erstreckt und der oberhalb einer durch die Mittelachse der Durchgangsbohrung 32 gedachten horizontalen Ebene endet. Ein weiterer, fünfter Schlitz 37 verläuft auf der Längsmittelachse des rechteckförmigen Querschnitts der Durchführung 33 von einer Querseite radial nach außen.

Beabstandet zu der Durchführung 33 ist diese bereichsweise umgebend in die Spindelaufnahme eine kreisbogenförmige Spreiznut 38 eingebracht, welche die schräg nach außen verlaufende vier Schlitze 37 verbindet und die zwei übereinander angeordnete kreisbogenförmige Federelemente 91, 92 aufnimmt. Durch diese vier Schlitze 37 und die kreisbogenförmige Spreiznut 38 sind drei innere Bremsbacken 371 und drei diesen inneren Bremsbacken 371 gegenüberliegende äußere Bremsbacken 372 gebildet. Das untere, erste Federelement 91 weist eine radial nach innen gerichtete Vorspannung und das obere, zweite Federelement 92 eine radial nach außen gerichtete Vorspannung auf. Das untere, erste Federelement 91 drückt über seine nach innen gerichtete Vorspannung die inneren Bremsbacken 371 gegen die Spindel 2, wodurch eine Bremswirkung gegenüber einer Schwenkbewegung der Spindel 2 bewirkt ist. Das obere, zweite Federelement 92 drückt über seine nach außen gerichtete Vorspannung die äußeren Bremsbacken 372 nach außen gegen das Kopfstück 1, wodurch eine Bremswirkung gegenüber einer Rotationsbewegung der Spindelaufnahme 3 innerhalb des Kopfstücks 1 bewirkt ist. Gegenüberliegend dem auf der Längsmittelachse des rechteckförmigen Querschnitts der Durchführung 33 befindlichen fünften Schlitzes 37 ist die Spreiznut 38 verengt ausgebildet, wodurch die auf die mittlere äußere Bremsbacke 372 wirkende Vorspannkraft des oberen zweiten Federelements 92 erhöht ist.

Die Federelemente 91, 92 weisen einen rechteckigen Querschnitt auf, wobei das untere erste Federelement 91 an einer äußeren umlaufenden Kante mit einem Radius 911 und das obere zweite Federelement 92 an einer inneren umlaufenden Kante mit einem Radius 921 versehen ist, wodurch das Einbringen der Federelemente 91, 92 in die Spreiznut 38 erleichtert ist. Die Spreiznut 38 weist etwa die eineinhalbfache Breite der Federelemente 91, 92 auf, sodass diese versetzt zueinander übereinander angeordnet sind.

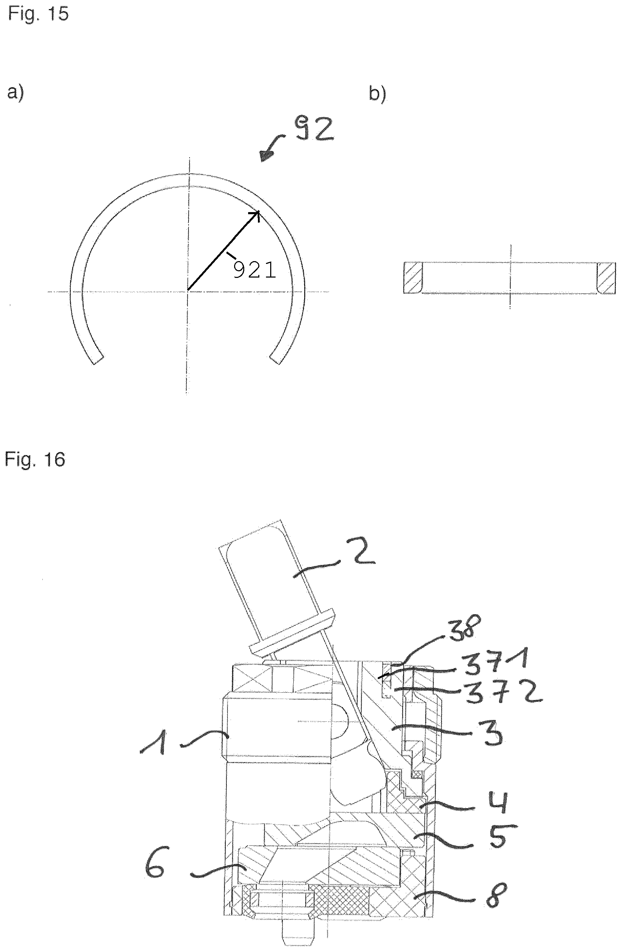

Im Ausführungsbeispiel gemäß Figur 16 weist die Spreiznut 38 eine Breite auf, die im Wesentlichen der Breite der Federelemente 91, 92 entspricht, sodass diese zu einem Block übereinander gestapelt sind. Wird die Spindel in Schließstellung gebracht, kann sie sich an der mit den Federelementen 91, 92 gefüllten Spindelaufnahme 3 abstützen, wobei ein Durchfedern nach außen vermieden ist. Die Montage der Federelemente 91, 92 ist in diesem Ausführungsbeispiel geringfügig gegenüber der vorstehend beschriebenen Variante erschwert.

Die Durchführung 33 mündet in einer im Wesentlichen quaderförmig ausgebildeten Aufnahme 35 für das Gleitstück 4. Beabstandet zu der Aufnahme 35 ist in der Spindelaufnahme 3 eine im Wesentlichen ovale Einbuchtung 36 zur Aufnahme des Führungsstiftes 44 des Gleitstücks 4 eingebracht.

Das als Kunststoffspritzgussteil ausgeführte Gleitstück 4 ist im Wesentlichen in Form einer Kreisscheibe ausgebildet, auf der ein im Wesentlichen quaderförmiges Formstück 41 angeformt ist. Das Formstück 41 ist derart ausgebildet, dass es innerhalb der Aufnahme 35 der Spindelaufnahme 3 in Längsrichtung verschiebbar und in Querrichtung geführt ist. Axial ist durch das Gleitstück 4 das Formstück 41 durchdringend ein Langloch 42 zur Aufnahme des Steuerkopfes 24 der Spindel 2 eingebracht. Seitlich des Formstücks 41 ist ein Führungsstift 44 zum Eingriff in die Einbuchtung 36 der Spindelaufnahme 3 angeformt. An seiner dem Formstück 41 entgegen gerichteten Unterseite sind an dem Gleitstück 4 außen gegenüberliegend zwei axiale Stege 43 zur Aufnahme der Steuerscheibe 5 angeformt. Weiterhin ist an der Unterseite ein Paßstift 45 zum Eingriff in die Paßbohrung 53 der Steuerscheibe 5 angeformt, wodurch eine lagegerechte Orientierung der Steuerscheibe 5 bei der Montage gewährleistet ist.

Die Steuerscheibe 5 ist oval ausgebildet und als Keramikteil hergestellt. An ihrer der Durchlassscheibe 6 zugewandten Seite weist die Steuerscheibe 5 eine mittig angeordnete, eiförmige Einbuchtung 51 auf. Auf ihrer der Einbuchtung 51 entgegen gesetzten Oberseite sind in der Steuerscheibe 5 diametral zueinander außen zwei Ausnehmungen 52 zur Aufnahme der Stege 23 des Gleitstücks 4 eingebracht. Weiterhin ist in der Steuerscheibe 5 an ihrer dem Gleitstück 4 zugewandten Seite eine Passbohrung 53 eingebracht. Über die Ausnehmungen 52 sowie die Passbohrung 53 ist die Steuerscheibe 5 mit dem Gleitstück 4 formschlüssig verbunden.

Die Durchlassscheibe 6 ist ebenfalls als Keramikteil ausgeführt. Durch die Durchlassscheibe 6 sind zwei Einlasskanäle 61 für kaltes bzw. warmes Wasser sowie ein relativ zu diesen vergrößert ausgebildeter Auslasskanal 62 für das Mischwasser eingebracht. Die Einlasskanäle 61 sowie der Auslasskanal 62 sind schräg zur Durchlassscheibe 6 durch diese hindurch geführt. Seitlich sind an der Durchlassscheibe 6 versetzt zueinander drei Aussparungen 63 zur formschlüssigen Verbindung mit dem Bodenstück 8 eingebracht.

Das Dichtungsformteil 7 ist im Ausführungsbeispiel aus Gummi hergestellt. Es ist im Wesentlichen durch drei Ringe 71 gebildet, die jeweils an den beiden übrigen Ringen 71 angeformt sind, sodass eine kleeblattartige Kontur gebildet ist. An den Ringen 71 des Dichtungsformteils 7 sind an deren Oberseite sowie an deren Unterseite jeweils Dichtlippen 72 angeformt. Zur Formstabilisierung sind die Ringe 71 jeweils mit einem Stützring 73 versehen, welche zwischen den Dichtlippen 72 der Ringe 71 angeordnet ist.

Das Bodenstück 8 ist im Wesentlichen zylinderförmig ausgebildet. Mittig ist in dem Bodenstück 8 eine kleeblattförmige Aufnahme für das Dichtungsformteil 7 eingebracht. Umlaufend der Aufnahme 81 sind beabstandet zueinander drei Stege 82 zur drehfesten Aufnahme der Durchlassscheibe 6 angeformt. Die Stege 82 greifen in die Aussparungen 63 der Durchlassscheibe 6 ein. Zur Verbesserung des Formschlusses sind an zwei Stegen 82 Nasen 821 abgeformt, welche in hierzu korrespondierende Aussparungen 63 der Durchlassscheibe 6 eingreifen. Seitlich sind an dem Bodenstück 8 diametral zueinander zwei Absätze 83 zum Eingriff in die Ausnehmungen 101 des endseitigen Abschnitts 10 des Kopfstücks 1 angeformt. An seiner den Stegen 82 gegenüberliegenden Unterseite sind an dem Bodenstück 8 weiterhin zwei axiale Positionierstifte 84 angeformt. Die Positionierstifte 84 dienen der Positionierung der Einhandhebelmischerkartusche in einer - nicht dargestellten - Armatur, welche hierzu mit entsprechenden Positionierbohrungen versehen ist. Umlaufend sind an dem Bodenstück 8 Rastnasen 85 angeformt, welche eine Rastverbindung zwischen dem Bodenstück 8 und dem Kopfstück 1 ermöglichen. Die Rastnasen 85 greifen in die Rastnut 111 der bogenförmigen Stege 11 des Kopfstücks 1 ein.

Im montierten Zustand ist der Befestigungsring 16 auf den durchmesserreduzierten Abschnitt 15 des Kopfstücks 1 übergestülpt, wobei die Rastnase 151 bei Passieren der umlaufenden Nase 164 des Befestigungsrings 16 elastisch nach innen gezwängt wird. Nach Passieren der Nase 164 des Befestigungsrings 116 nimmt die Rastnase 151 des durchmesserreduzierten Abschnitts 15 des Kopfstücks 1 ihre ursprüngliche Position wieder ein. Der Befestigungsring 16 ist somit verliersicher an dem Kopfstück 1 gehalten. Das Einschrauben des Befestigungsrings 16 in eine - nicht dargestellte - Armatur erfolgt über den Außensechskant 163.

## Patentansprüche

1. Einhandhebelkartusche, umfassend ein Kopfstück (1), das ein Bodenstück (8) aufnimmt, sowie eine Scheibensteuerung mit einer Steuerscheibe (5), welche über eine in einer Spindelaufnahme (3) drehbar und/oder schwenkbar gelagerte Spindel (2) drehbar und/oder verschiebbar angeordnet ist, wobei die Spindelaufnahme eine Durchführung (33) für die Spindel (2) aufweist, wobei in die Spindelaufnahme (3) im Bereich der Durchführung (33) wenigstens zwei Schlitze (37) eingebracht sind, wodurch die Innenkontur der Durchführung (33) in einem endseitigen Abschnitt der Spindelaufnahme (3) unterbrochen ist, **dadurch gekennzeichnet, dass** in der Spindelaufnahme (3) beabstandet zur Durchführung (33) eine Spreiznut (38) angeordnet ist, in die wenigstens ein Spreizkörper (91, 92) eingebracht ist.

2. Einhandhebelkartusche nach Anspruch 1, **dadurch gekennzeichnet, dass** die Spindelaufnahme aus einem von dem Kopfstück (1) verschiedenen Material hergestellt ist.

3. Einhandhebelkartusche nach Anspruch 1 oder 2, **dadurch gekennzeichnet, dass** die Spreiznut bogenförmig ausgebildet ist.

4. Einhandhebelkartusche nach einem der vorgenannten Ansprüche, **dadurch gekennzeichnet, dass** die Durchführung (33) zumindest an dem der Steuerscheibe (5) abgewandten Ende der Spindelaufnahme (3) einen rechteckigen Querschnitt aufweist, wobei die Innenkontur des rechteckigen Querschnitts der Durchführung (33) bereichsweise durch wenigstens drei Schlitze (37) unterbrochen ist.

5. Einhandhebelkartusche nach Anspruch 4, **dadurch gekennzeichnet, dass** die Innenkontur des rechteckigen Querschnitts der Durchführung (33) bereichsweise durch wenigstens vier Schlitze (37), bevorzugt durch fünf Schlitze (37) unterbrochen ist.

6. Einhandhebelkartusche nach Anspruch 4 oder 5, **dadurch gekennzeichnet, dass** wenigstens ein Schlitz (37) mittig durch eine Seitenwand des rechteckigen Querschnitts der Durchführung (33) in diese mündet.

7. Einhandhebelkartusche nach einem der vorgenannten Ansprüche, **dadurch gekennzeichnet, dass** der wenigstens eine Spreizkörper bogenförmig ausgebildet ist und zumindest bereichsweise eine Breite aufweist, die größer ist, als die Breite der Spreiznut (38).

8. Einhandhebelkartusche nach einem der Ansprüche 1 bis 6, **dadurch gekennzeichnet, dass** die Spreizkörper durch zwei zueinander entgegengerichtet radial vorgespannte Federelemente (91, 92) gebildet sind.

9. Einhandhebelkartusche nach Anspruch 8, **dadurch gekennzeichnet, dass** die Breite der Spreiznut (38) größer ausgebildet ist, als die Breite der Federelemente (91, 92).

10. Einhandhebelkartusche nach Anspruch 8, **dadurch gekennzeichnet, dass** die Spreiznut (38) eine Breite aufweist, die im Wesentlichen der der Federelemente (91, 92) entspricht, sodass diese zu einem Block übereinander gestapelt sind.

11. Einhandhebelkartusche nach einem der vorgenannten Ansprüche, **dadurch gekennzeichnet, dass** die Spindel (2) über eine Achse (23) mit der Spindelaufnahme (3) verbunden ist, wobei der wenigstens eine Schlitz (37) nicht über eine durch diese Achse (23) geführte gedachte horizontale Ebene hinausgeht.

12. Einhandhebelkartusche nach einem der vorgenannten Ansprüche, **dadurch gekennzeichnet, dass** die Spindelaufnahme (3) als im Wesentlichen zylinderförmiges Kunststoffspritzgussteil ausgebildet ist.

13. Einhandhebelkartusche nach einem der Ansprüche 4 bis 12, **dadurch gekennzeichnet, dass** an wenigstens zwei Ecken des rechteckigen Querschnitts der Durchführung (33) jeweils ein Schlitz (37) mündet.

## Claims

1. Single-hand lever cartridge, comprising a head piece (1) which holds a base piece (8), and a disk-control system with a control disk (5) which is arranged in such a way that it can rotate and/or move via a spindle (2) which is mounted movably and/or rotatably in a spindle seat (3), where the spindle seat has a duct (33) for the spindle (2), where at least two slots (37) are made in the spindle seat (3) in the area of the duct (33), by means of which the inner contour of the duct (33) is interrupted at a section of the spindle seat (3) towards its end, **characterised in that** a spreading groove (38) is arranged in the spindle seat (3) at a distance from the duct (33), in which groove (38) at least one spreading body (91, 92) is located.

2. Single-hand lever cartridge in accordance with claim 1, **characterised in that** the spindle seat is made of a different material from that of the head piece (1).

3. Single-hand lever cartridge in accordance with claim 1 or claim 2, **characterised in that** the spreading groove is curved in shape.

4. Single-hand lever cartridge in accordance with any of the above claims, **characterised in that** the duct (33) has a rectangular cross-section at least at the end of the spindle seat (3) facing away from the control disk (5), where the inner contour of the rectangular cross-section of the duct (33) is interrupted in places by at least three slots (37).

5. Single-hand lever cartridge in accordance with claim 4, **characterised in that** the inner contour of the rectangular cross-section of the duct (33) is interrupted in places by at least four and preferably five slots (37).

6. Single-hand lever cartridge in accordance with claim 4 or claim 5, **characterised in that** at least one slot (37) passes centrally through a side wall of the rectangular cross-section of the duct (33) and opens into it.

7. Single-hand lever cartridge in accordance with any of the above claims, **characterised in that** the at least one spreading body is curved in shape and is wider, at least in part, than the spreading groove (38).

8. Single-hand lever cartridge in accordance with any of the claims 1 to 6, **characterised in that** the spreading bodies are formed by two radially pre-tensioned spring elements (91, 92) facing one another.

9. Single-hand lever cartridge in accordance with claim 8, **characterised in that** the width of the spreading groove (38) is greater than that of the spring elements (91, 92).

10. Single-hand lever cartridge in accordance with claim 8, **characterised in that** the width of the spreading groove (38) corresponds substantially to that of the spring elements (91, 92) such that these are piled on top of one another forming a block.

11. Single-hand lever cartridge in accordance with any of the preceding claims, **characterised in that** the spindle (2) is joined to the spindle seat (3) by an axle (23), where the at least one slot (37) does not extend beyond an imaginary horizontal plane defined by this axle (23).

12. Single-hand lever cartridge in accordance with any of the preceding claims, **characterised in that** the spindle seat (3) is formed as a substantially cylindrical injection plastic moulding.

13. Single-hand lever cartridge in accordance with any of the claims 4 to 12, **characterised in that** one slot (37) opens onto each of at least two corners of the rectangular cross-section of the duct (33).

## Revendications

1. Cartouche de mitigeur monocommande comprenant une pièce têtière (1) qui reçoit une pièce de fond (8) ainsi qu'une commande à disque comprenant un disque de commande (5) agencé de façon à pouvoir tourner et/ou coulisser via une broche (2) en appui rotatif et/ou pivotant dans un logement (3) de broche, sachant que le logement de broche présente un passage (33) pour la broche (2), sachant que dans le logement (3) de broche au moins deux fentes (37) ont été ménagées dans la zone du passage (33), faisant que le contour intérieur du passage (33) est interrompu dans un segment situé à l'extrémité du logement (3) de broche, **caractérisée en ce que** dans le logement (3) de broche, à une certaine distance du passage (33), est agencée une gorge d'expansion (38) dans laquelle est logé au moins un corps à expansion (91, 92).

2. Cartouche de mitigeur monocommande selon la revendication 1, **caractérisée en ce que** le logement de broche est fabriqué dans matériau autre que celui de la pièce têtière (1).

3. Cartouche de mitigeur monocommande selon la revendication 1 ou 2, **caractérisée en ce que** la gorge d'expansion est configurée en arc.

4. Cartouche de mitigeur monocommande selon l'une des revendications précédentes, **caractérisée en ce que** le passage (33) présente une section rectangulaire au moins à l'extrémité du logement (3) de broche ne regardant pas le disque de commande (5), sachant que le contour intérieur de la section rectangulaire du passage (33) est interrompu localement par au moins trois fentes (37).

5. Cartouche de mitigeur monocommande selon la revendication 4, **caractérisée en ce que** le contour intérieur de la section rectangulaire du passage (33) est interrompu localement par au moins quatre fentes (37), de préférence par cinq fentes (37).

6. Cartouche de mitigeur monocommande selon la revendication 4 ou 5, **caractérisée en ce qu'**au moins une fente (37) traversant au milieu une paroi latérale de la section rectangulaire du passage (33) aboutit dans ce dernier.

7. Cartouche de mitigeur monocommande selon l'une des revendications précédentes, **caractérisée en ce qu'**au moins un corps à expansion est configuré en arc et présente au moins localement une largeur plus importante que la largeur de la gorge d'expansion (38).

8. Cartouche de mitigeur monocommande selon l'une des revendications 1 à 6, **caractérisée en ce que** les corps à expansion sont formés par deux éléments ressorts (91, 92) sous précontrainte radiale orientés l'un vers l'autre.

9. Cartouche de mitigeur monocommande selon la revendication 8, **caractérisée en ce que** que la largeur de la gorge d'expansion (38) est configurée plus importante que la largeur des éléments ressorts (91, 92).

10. Cartouche de mitigeur monocommande selon la revendication 8, **caractérisée en ce que** la gorge d'expansion (38) présente une largeur correspondant pour l'essentiel à celle des éléments ressorts (91, 92), de sorte que ces derniers sont empilés pour former un bloc.

11. Cartouche de mitigeur monocommande selon l'une des revendications précédentes, **caractérisée en ce que** la broche (2) est reliée avec le logement (3) de broche via un axe (23), sachant qu'au moins une fente (37) ne va pas au-delà d'un plan horizontal abstrait traversant cet axe (23).

12. Cartouche de mitigeur monocommande selon l'une des revendications précédentes, **caractérisée en ce que** le logement (3) de broche est configuré essentiellement comme une pièce en matière plastique injectée de forme cylindrique.

13. Cartouche de mitigeur monocommande selon l'une des revendications 4 à 12, **caractérisée en ce qu'**à au moins deux angles de la section rectangulaire du passage (33) aboutit respectivement une fente (37).
